# EUROPEAN PATENT APPLICATION

(11) **EP 2 199 955 A1**
(43) Date of publication of application: **23.06.2010**
(21) Application number: 08022165.8
(22) Date of filing: 19.12.2008
(51) Int. Cl.: G06Q 10/00

(54) **Helpdesk support system with test probes**

(71) Applicant: Koninklijke KPN N.V., 2516 CK The Hague (NL)
(72) Inventor: Voorbraak, Reinhold Marnix Antoine, 2651 WL Berkel en Rodenrijs (NL)
(74) Representative: Wuyts, Koenraad Maria

(57) **Abstract**

The invention relates to a helpdesk support system (100) for use with multiple data processing systems (140) connected to the helpdesk support system via a data network. The helpdesk support system (100) comprises a configuration database (104) comprising multiple records, wherein each specific one of the multiple records comprises specific configuration information representative of a specific one of the multiple data processing systems in operational use; and a test manager module (110). The test manager module is configured to selectively activate a particular one of multiple test probes (122, 124, 126, 128). The particular test probe is operative to test a particular functionality present in one or more of the data processing systems. The test manager module is arranged to select the particular test probe at least in dependency on a specific one of the multiple records.

## Description

### FIELD OF THE INVENTION

The invention relates to a helpdesk support system for use with multiple data processing systems connected to the helpdesk support system via a data network.

The invention further relates to a corresponding helpdesk support method and software.

### BACKGROUND OF THE INVENTION

Communication service providers typically provide multiple services related to different types of data communication, such as data transfer and/or exchange services. For example, a single provider may provide both telephony services and Internet services. There are scale advantages with respect to overhead for a communication service provider in providing multiple services. For example, a single help desk may provide first-line support for most of the multiple data exchange services. Preferably, the help desk will also provide support for applications related to the services.

When a customer has a problem with one of the multiple services, the first-line support is the first contact the customer has within the organization of the communication service provider. Problems that the help desk may be asked to solve range from help with configuration and installation to complicated trouble-shooting. Typically, a first-line support engineer may escalate the more complicated problems to an expert, i.e., to a second-line of customer support. For the organization, the help desk provides a vital function. They are instrumental in customer satisfaction.

### SUMMARY OF THE INVENTION

As noted above, the help desk supports many services and applications. It is one object of the present invention to improve the problem-solving capacity of the help desk by providing it with a helpdesk support system.

The helpdesk support system is configured for use with multiple data processing systems connected to the helpdesk support system via a data network. The helpdesk support system comprises: a configuration database comprising multiple records, wherein each specific one of the multiple records comprises specific configuration information representative of a specific one of the multiple data processing systems in operational use; and a test manager module, the test manager module being configured to selectively activate a particular one of multiple test probes. The particular test probe is operative to test a particular functionality present in one or more of the data processing systems. The test manager module is arranged to select the particular test probe at least in dependency on a specific one of the multiple records. Preferably, the test manager module selects the particular test probe for later activation.

By combining a configuration database with multiple test probes the problem-solving capacity of the help desk is improved. Using the help desk support system, a help desk engineer may, without the need of intervention by an export, i.e. a second-line support engineer, activate a suitable test probe. A test probe may provide the needed information to resolve the problem. For example, using the configuration database the particular services provided to a customer can be evaluated and reviewed using a suitable test probe. The test probe may then identify a cause for the problem. Accordingly, a larger percentage of customer problems can be resolved faster by the help desk thus improving customer satisfaction. Even if the precise cause cannot be located by the help desk, a domain may be identified in which the cause of the problem is located. This has the advantage of a more efficient follow-up, by other support personnel.

In a preferred embodiment, the test manager module is arranged to execute a programmed test sequence and wherein the particular test probe is selected at least in dependency on the programmed test sequence.

Using a programmed test sequence has the advantage that for standard types of problems, a standard sequence of test probes may be executed. Accordingly, these common types of problems may be resolved in a standardized manner, which is independent of the particular help desk engineer confronted with the problem.

In a preferred embodiment, the multiple test probes comprise test functionality for at least one of the following: Wireless connectivity, Internet Protocol (IP), Internet, E-mail, and/or telephony.

It is an insight of the inventor that tests may be aimed at any one of the 7 layers of the OSI Model. For example, for Layer 1, i.e. the Physical Layer, test may be aimed at, e.g., copper lines, e.g. for DSL, or at 802.11 a/b/g/n, for wireless, etc. For Layer 2, the Data link Layer, tests may be aimed at, e.g., ATM or Ethernet testing, etc. For Layer 3, the Network layer, tests may be aimed at, e.g., IP or ICMP protocol testing, etc. For layer 4, the Transport layer, tests may be aimed at, e.g., TCP or UDP testing, etc. For Layer 5, the Session layer, tests may be aimed at, e.g., SIP for telephony, etc. For Layer 6, the Presentation layer, tests may be aimed at, e.g., SSL encryption testing, etc; For Layer 7, the Application layer, tests may be aimed at, e.g., mail, web or ftp traffic, etc.

In a preferred embodiment, the test manager module is configured to selectively activate a particular one of multiple repair probes, the particular repair probe being operative to repair a particular functionality present in one or more of the data processing systems, and wherein the test manager module is arranged to activate the particular repair probe at least in dependency on the specific one of the multiple records.

In addition to test probes, which automate or assist the detecting of a cause of a problem the test manager module may also manage multiple repair probes. Some types of standard problems can be resolved in an automated manner. By integrating the management of repair probes the percentage of problems which can be resolved quickly by the helpdesk further increases.

For example, the particular repair probe may be arranged to reset a specific port of multiple ports in a telephone exchange, wherein the specific port is selected from the multiple ports at least in dependency on the specific one of the multiple records.

It is a further insight of the inventor that repair probes can be aimed at any one of the layers of the OSI model. For layers 1 and 2, for example, possible repair actions include the automatic transmission of replacement parts, and/or the automatic dispatching of a mechanic, etc. For layers 3 to 7, for example, possible repair actions include the automatic changing, adapting, modifying and/or resetting of devices, parameters, and/or applications.

In a preferred embodiment, the particular test probe and/or the particular repair probe is configured on the basis of the specific one of the multiple records.

A test probe may need configuration before it can be used for a particular customer. For example, configuration information representative of the specific data processing system may be needed by the test probe. The configuration of test probes is advantageously done automatically by the test manager module.

In a preferred embodiment, the test manager module is arranged to receive a representation of a test problem, and the test manager module is arranged to display a work flow specific for the test problem on a work flow viewer.

It is advantageous to further standardize the resolving of standard problems. The test manager module may receive a representation of a test problem. For example, a test problem may be to test the e-mail functionality of a particular customer's data processing system, and to locate the cause of any malfunction. This is achieved by arranging the test manager module to receive a representation of such a test problem. The test manager module may then display a workflow which may be followed to efficiently determine the cause of a malfunction. Note that as part of the workflow one or more programmed test sequences may also be activated.

In addition, the time needed for a help desk engineer to be educated for a new technical domain is reduced.

The invention further relates to a helpdesk support method for use with multiple data processing systems connected to a helpdesk support system via a data network, and with a configuration database comprising multiple records. Each specific one of the multiple records comprises specific configuration information representative of a specific one of the multiple data processing systems in operational use. The method comprises: selecting and activating a particular one of multiple test probes; and testing by the particular test probe a particular functionality present in one or more of the data processing systems. The test manager module activates the particular test probe at least in dependency on a specific one of the multiple records.

The invention further relates to a computer program comprising computer program code means adapted to perform all the steps of a method according to the invention when the computer program is run on a computer. Preferably, the computer program is embodied on a computer readable medium.

### BRIEF DESCRIPTION OF THE DRAWINGS

The invention is explained in further detail by way of example and with reference to the accompanying drawings, wherein:

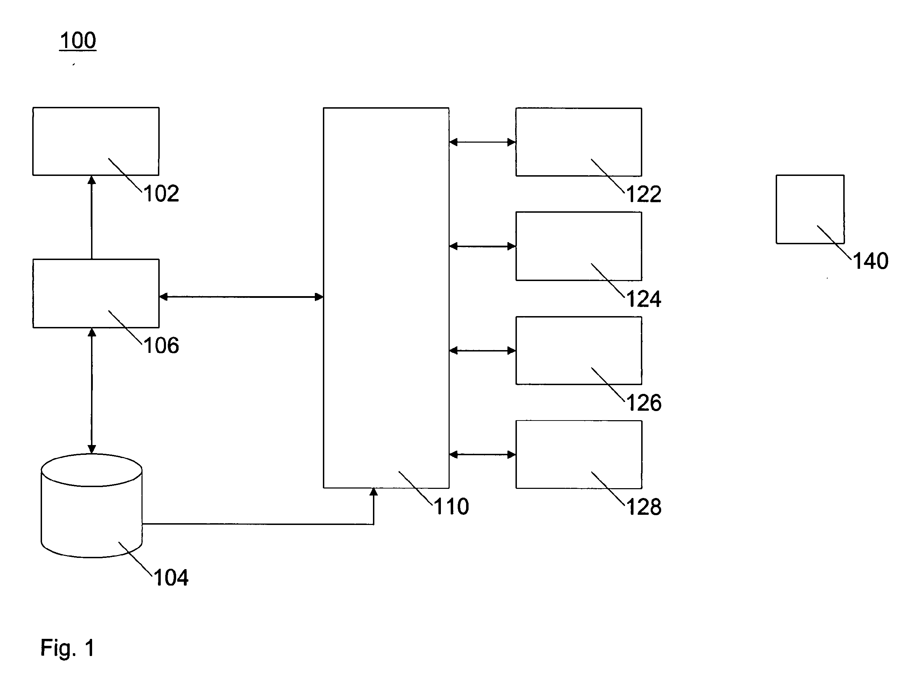

Figure 1 is a block diagram illustrating a first embodiment of the help desk support system according to the invention.

### List of Reference Numerals:

- 100: a help desk support system
- 102: a work flow viewer
- 104: a configuration database
- 106: a server
- 110: a test manager module
- 122-128: a test probe
- 140: a data processing system

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

**Figure 1** illustrates in a block diagram a first embodiment of the help desk support system according to the invention.

The figure shows a help desk support system 100 comprising a test manager module 110, a work flow viewer 102, a configuration database 104 and a server 106. Help desk support system 100 is connected via a data network (not shown) to multiple data processing systems. One of the multiple data processing systems is shown: data processing system 140.

The test manager module 110 is coupled to multiple test probes. Shown in the figure are test probes 122, 124, 126 and 128. The number of 4 test probes can be different; both more and fewer test probes are possible. The test probes may be written in software and run on a computer, possibly on the test manager module itself.

Server 106 and/or test manager module 110 are connected to configuration database 104 to access one or more of multiple records stored in configuration database 104. Work flow viewer 102 is connected to server 106 to display results produced by server 106 and/or to receive inputs, needed by server 106. Note that in a practical embodiment, work flow viewer 102 and server 106 may be integrated. Also, server 106 and test manager module 110 may be integrated.
Figure 1 only shows one database: configuration database 104, but server 106 and/or test manager module 110 may be connected to multiple databases. For example, customer details, such as names and address may be stored in a separate database. Also each of the services offered by the service provider may have its own configuration database.

The configuration of each one of the multiple data processing systems is represented in one or more of the multiple records, which are stored in configuration database 104.

In particular, at least one record in configuration database 104 is representative of data processing system 140 in operational use.

For example, data processing system 140 may be a router, a telephone, a computer system, a television configured for IP TV, etc. Data processing system 140 may be located in the homes of customers of a communications service provider. Data processing system 140 may also be a data processing system in a business. Data processing system 140 comprises at least one device, but may also comprise multiple, possibly interconnected, devices.

Each one of the test probes is arranged to test a particular functionality present in one or more of the data processing systems. The test manager module is configured to select and/or activate a particular one of multiple test probes. The test manager module may be arranged to activate the particular test probe at least in dependency on a specific one of the multiple records.

During operation a customer may make contact with help desk support system 100, for example, the customer may contact, using a telephone connection, using e-mail, or any other suitable form of communication. Preferably, the customer is connected with help desk support system 100 through a human intermediate, although this not necessary. The customer may have a problem with one more of the services he/she receives from the service provider, i.e., the operator of help desk support system 100. Example services include: telephony, mobile telephony, a leased line, voice over IP (VOIP), IP television (IPTV), Digital Video Broadcasting Terrestrial (DVB-T), etc. DVB-T typically comprises the transmission of audio and/or video broadcasts in MPEG format.

The customer may identify himself to help desk support system 100 using various means. For example, he/she may identify himself using one or more of: a name, a customer serial number, a billing number, a postal code, an address, the services he/she uses, etc.

The information provided by the customer, i.e. the search data, is preferably entered at work flow viewer 102. Help desk support system 100 will consult at least one databases, such as configuration database 104, to search for records compatible with the information. Preferably, help desk support system 100 will consult multiple databases, for example, one for each service the operator of help desk support system 100 offers.

It may happen that multiple customers in the multiple databases are compatible with the search data used to identify the particular customer having the problem. In that situation help desk support system 100 will display, through the work flow viewer 102, an overview of the services offered and the number of customers found for each service compatible with the search criteria entered. In this embodiment, help desk support system 100 is principally managed from server 106, note however that server 106 may be a distributed system. Note also, that to a large extend functionality of server 106 may be transferred to work flow viewer 102. Work flow viewer 102 may be a web browser, such as is known in the art. Work flow viewer 102 may be connected to server 106 using direct connection, or via a network, e.g. the Internet, etc.

For example, the customer may be identified with a representation of a geographical region, e.g., a postal code. Server 106 may then consult multiple databases containing customer data, possibly also including configuration information. For example, help desk support system 100 may consult: a database for Internet, for Asymmetric Digital Subscriber Line (ADSL), for Virtual Private Network (VPN) and for Digital Video Broadcasting-Terrestrial (DVB-T). Work flow viewer 102 may thereupon display a list such as the following:

| | |
|---|---|
| Internet | 15 |
| ADSL | 17 |
| VPN | 0 |
| DVB-T | 2 |

This table indicates that in the region indicated by the postal code, there are 15 customer using Internet services, there are 17 customers using ADSL services, etc. Note that one customer may use more than one service.

A user of work flow viewer 102 then has the option of selecting one of these services, e.g., through clicking on them, and then selecting the correct customer from a shown list of customers satisfying the search criteria. A user of work flow viewer 102 may also further specify the customer, e.g., by supplying further information, e.g., an address, etc., to the system. Upon receiving the further information the list, such as the list shown above, will be updated. Presumably, fewer customers will satisfy both the initial information and the further information.

We consider a method of locating a customer in multiple databases such as described above to have independent inventive merit. For example, one embodiment of the method of locating a customer in multiple databases comprises the following steps: receiving at least one search datum, e.g., a representation of a geographical region; counting in each one of multiple databases all records satisfying the search datum to produce multiple counts; displaying a representation for each one of the multiple databases along with a representation of a corresponding one of the multiple counts; Moreover, a further embodiment of the method of locating a customer in multiple databases comprises: receiving a selection of one of the multiple databases; displaying a representation, e.g., a summary, of each one of the records satisfying the search datum in the selected database. For example, a record satisfies a search datum if the search datum is comprised in the record.

Note that, although the above method of locating a customer is convenient, it is not essential to using the method according to the invention.

After a unique customer is identified, help desk support system 100 may display on work flow viewer 102 a screen giving details of the customer. Preferably, first a high level overview is given, for example, by listing only the types of services used by the customer. More details are available by selecting, e.g., one of the services. Note that to a user of work flow viewer 102 it appears he/she is consulting a single database; however it may be that multiple databases, i.e., multiple sources of information, are combined by server 106 and presented together through work flow viewer 102.

When a unique customer has been located, server 106 and/or test manager module 110 may immediately consult the multiple databases to create a list of the services the customer uses and/or the devices the customer uses. Consulting a problem data base, any known problem with those services may be presented through work flow viewer 102. For example, it may be found, say from configuration database 104, even before any problem has been reported by the customer, that the customer uses an ADSL connection. Moreover, by consulting the problem database, it may also be found that the ADSL in the geographical area of the customer is currently out of order.
Combining these two items, server 106 can then display on work flow viewer 102 information related to this problem.

After a unique customer has been located, the type of service may be indicated that the customer has a problem with. For example, the human intermediate may enter the type of service using work flow viewer 102. It is also possible that the customer sends a representation of the troublesome service, using electronic means, e.g., using e-mail or a web based form.

In dependency on the technical problem, test manager module 110 may automatically select and activate one or more of the test probes. For example, if the customer indicates that the problem is related to Internet, e.g., a malfunctioning Internet connection. Test manager module 110 may automatically activate the technical network needed for Internet. For example, test manager module 110 may perform a test of the Digital Subscriber Line Access Multiplexer (DSLAM) connection between the connection point of the customer's device, e.g., in data processing system 140, and the service provider. A DSLAM is a distribution point connection multiple customer devices with at least one network connection.

For example, test manager module 110 may automatically test if data can be sent over the line at all; test manager module 110 may automatically test the speed with which data may be sent. Test manager module 110 may also automatically compare this information with information found in configuration database 104. For example, in a record in configuration database 104 it may be found, e.g., that the customer is configured for an Internet connection with a throughput of 8 Mega bit (mbit). Test manager module 110 may then report that there is a discrepancy between the information in configuration database 104 and the actual configuration of data processing system 140 and the data network through which data processing system 140 is connected for a service.

Optionally, before information on the customer's problem, has been entered, test probes may be selected for the services used by the customer. Suppose as an example, that a customer is connected with the help desk support system 100. Then, as soon as it is identified, e.g., from configuration database 104, that that customer uses Internet services, his Internet may be tested.

Preferably, test manager module 110 and/or server 106 automatically configure a test probe before the test probe is activated with information from configuration database 104. For example, the test probe may be configured with the details of the object to test.

Test manager module 110 may also have a table indicating which services depend on which other services. For example, if the customer has a problem with VOIP or IPTV, the table may indicate that these services rely on an Internet connection. Test manager module 110 may select the test probes for testing the services on which the problematic services rely. For example, if a problem with IPTV is reported, help desk support system 100 through test manager module 110 automatically performs tests for Internet.

Test manager module 110 forwards the results of the tests to server 106, which in turn displays the test results through work flow viewer 102. For example, a button with a textual representation of the type of test may turn from green to red, if the corresponding test probe has found an error.

In addition, server 106 may start a work-flow, i.e., a scripted plan on how to resolve this problem. For example, server 106 may ask the customer further questions, in dependency on the type of problem. Preferably, server 106 instructs a human intermediate to ask these questions. Alternatively, server 106 presents these question electronically, e.g., through a web-form or an e-mail. The customer may be asked, e.g., which particular devices are comprised in data processing system 140, of what brands those devices are, of what make, etc. Based on this information, server 106 can automatically present lists of known problems, ask further questions, start special problem resolving scripts, etc.

Server 106 may also keep records of reported problems. For example, if a customer has a problem and uses a particular type of device. Then server 106 may automatically report the number of problems that were reported with this particular type of device in the past. If this number is high, this may indicate a likelihood that the problem is related to the device.

Some types of data processing system 140 have build in analysis or repair possibilities. Based on the type of equipment in data processing system 140, such as can be found in configuration database 104, or may be asked to the customer, test manager module 110 can start special test probes aimed at this type of equipment. For example, for some types of equipment, test manager module 110 may automatically retrieve detailed error reports, or test manager module 110 may automatically execute a reset action. Test manager module 110 may even reconfigure data processing system 140 remotely; for example by uploading new firmware to the data processing system 140.

Help desk support system 100 presents therefore a combination of administrative databases, knowledge systems, and technical test systems.

Test manager module 110 may also execute a programmed test sequence, for example, to make the selection and activation of certain test probes dependent on other factors, such as: the results of interaction with the customer, information from configuration database 104, results of other test probes which were executed earlier.

Instead of test probes, or in addition thereto, test manager module 110 may also have one or more repair probes. When it is found what the cause of a problem is, e.g., as a result of the execution of a test probe, a repair probe may be activated. Some problems do not need a local engineer to resolve them. For example, if it is found that a problem with a telephone line is caused by a problem with the gate with which the telephone line is connected inside a telephone exchange, the problem is frequently resolved by resetting that gate. The resetting of the gate may be done by the repair probe sending the appropriate commands to the telephone exchange. Preferably, the repair probe is configured using information from configuration database 104. For example, the repair probe may be configured to reset the correct gate.

An advantage of help desk support system 100 is that accepting a problem report and resolving the problem can often be handles by the same person. This is more efficient, and also increases customer satisfaction. In the unfortunate situation that the help desk is not capable to resolve the problem on its own, a repair engineer may be instructed to resolve the problem. The repair engineer may receive details from test manager module 110 regarding the nature of the problems, also through the use of the test probes.

Also, help desk support system 100 makes it possible to automate a large part of the problem resolving process, though customer self-service. A customer may use his own web browser as work flow viewer 102.

It is noted that many types of test probes can be combined with the invention. As an example, a number of test probes are described.

An ATM test probe can test an ATM data network. ATM is a cell-switching and multiplexing technology which used in some telephone networks. Items such as throughput and reliability may be tested by sending and/or receiving test packets.

A test probe may be aimed at modems, such as an ADSL modem, which is local to the customer, e.g., in data processing system 140. If the modem has special diagnostic capabilities then the test probe may be configured to use those capabilities. Also if the modem allows remote repair actions, then a repair probe may be configured to use those capabilities. For example, some test modems allow remote reset actions; for such modems, test manager module 110 may have special repair probes, which use such reset actions.

Data processing system 140 may also itself comprise a network, comprising e.g., an Ethernet network and/or a VPN. A network analyzer probe may remotely analyze the network, and remotely map which components of the network are operative, etc.

Test probes may be specifically aimed at some specific services. These test probes specifically test the functionality of, e.g.: VOIP, IPTV, E-mail, a domain name system (DNS), web hosting, etc. For example, a test probe aimed at VOIP, may try to place a call to a telephone number found in configuration database 104.

A test probe need not necessarily interact directly with the customer's devices. For example, a so-called 'radius test-probe' tests whether an IP address has been assigned to the devices in data processing system 140. Another probe can test if the devices actually use an assigned IP address. The results of these test can indicate if an IP-address related problem is located on a customer's device or on a device of the service provider. Similarly, a SIP Tests, can be used for VOIP problems. The SIP test determines if a telephone number has been assigned.

Test probes may test the various types of DSL, such as ADSL, VDSL etc.

## Claims

1. A helpdesk support system (100) configured for use with multiple data processing systems (140) connected to the helpdesk support system via a data network, comprising:
a configuration database (104) comprising multiple records, wherein each specific one of the multiple records comprises specific configuration information representative of a specific one of the multiple data processing systems in operational use; and
a test manager module (110), the test manager module being configured to selectively activate a particular one of multiple test probes (122, 124, 126, 128), the particular test probe being operative to test a particular functionality present in one or more of the data processing systems;
wherein
the test manager module is arranged to select the particular test probe at least in dependency on a specific one of the multiple records.

2. A helpdesk support system as in Claim 1, wherein the test manager module is arranged to execute a programmed test sequence and wherein the particular test probe is selected at least in dependency on the programmed test sequence.

3. A helpdesk support system as in Claim 1 or 2, wherein the multiple test probes comprise test functionality for at least one of the following: Wireless connectivity, Internet Protocol (IP), Internet, E-mail, and/or telephony.

4. A helpdesk support system as in any one of the preceding claims, wherein the test manager module is configured to selectively activate a particular one of multiple repair probes, the particular repair probe being operative to repair a particular functionality present in one or more of the data processing systems, and wherein the test manager module is arranged to activate the particular repair probe at least in dependency on the specific one of the multiple records.

5. A helpdesk manager as in Claim 4, wherein the particular repair probe is arranged to reset a specific port of multiple ports in a telephone exchange,
wherein the specific port is selected from the multiple ports at least in dependency on the specific one of the multiple records.

6. A helpdesk manager as in any one of the preceding claims, wherein the particular test probe and/or the particular repair probe is configured on the basis of the specific one of the multiple records.

7. A helpdesk manager as in any one of the preceding claims, wherein the test manager module is arranged to receive a representation of a test problem, and
wherein the test manager module is arranged to display a work flow specific for the test problem on a work flow viewer (102).

8. A helpdesk support method for use with multiple data processing systems connected to a helpdesk support system via a data network, and with a configuration database comprising multiple records, wherein each specific one of the multiple records comprises specific configuration information representative of a specific one of the multiple data processing systems in operational use,
the method comprising:
selecting and activating a particular one of multiple test probes; and
testing by the particular test probe a particular functionality present in one or more of the data processing systems, wherein
the test manager module activates the particular test probe at least in dependency on a specific one of the multiple records.

9. A computer program comprising computer program code means adapted to perform all the steps of Claim 8 when the computer program is run on a computer.

10. A computer program as claimed in claim 9 embodied on a computer readable medium.
